# EUROPÄISCHE PATENTSCHRIFT

(11) **EP 1 554 527 B1**
(45) Veröffentlichungstag und Bekanntmachung des Hinweises auf die Patenterteilung: **29.11.2006**
(21) Anmeldenummer: 03773652.7
(22) Anmeldetag: 18.10.2003
(51) Int. Cl.: F24J 2/26

(54) **HELIOTHERMISCHER FLACHKOLLEKTOR-MODUL IN SANDWICHBAUWEISE**
HELIOTHERMAL FLAT COLLECTOR MODULE HAVING A SANDWICH STRUCTURE
MODULE COLLECTEUR PLAT HELIOTHERMIQUE PRESENTANT UNE STRUCTURE EN SANDWICH

(30) Priorität: 23.10.2002 DE 20216297 U
(43) Veröffentlichungstag der Anmeldung: 20.07.2005
(73) Patentinhaber: Rheinzink GmbH & Co. KG, 45711 Datteln (DE)
(72) Erfinder: NEUMANN, Frank, 45711 Datteln (DE); PATSCHKE, Markus, 59394 Nordkirchen/Südkirchen (DE); SCHÖNNENBECK, Marianne, 44795 Bochum (DE)
(74) Vertreter: Hoffmeister, Helmut
(86) Internationale Anmeldenummer: PCT/EP2003/011573
(87) Internationale Veröffentlichungsnummer: WO 2004/038306

(56) Entgegenhaltungen:
- EP-A- 0 000 543
- EP-A- 0 009 472
- WO-A-99/19914
- DE-C- 10 043 295
- DE-U- 20 216 297
- FR-A- 2 465 966

## Beschreibung

Die Erfindung betrifft einen selbsttragenden, heliothermischen Flachkollektor-Modul, der umfasst:
- ein Metallblech-Paneel,
- eine registerartige Anordnung von untereinander in Abstand liegenden Kapillar-Röhrchen für den Durchlauf eines flüssigen Mediums, die auf der der zu bestrahlenden Seite abgewandten Rückseite des Metallblech-Paneels liegt,
- und einen thermoisolierenden Dämmstoffkern, der ebenfalls rückseitig angeordnet ist.

Ein Flachkollektor-Modul dieser Art ist aus der DE-PS 100 43 295 der Anmelderin bekannt. Diese Schrift sieht grundsätzlich vor, die Kapillar-Röhrchen durch Aufspritzen von flüssigen Metallpartikeln mit dem Blechpaneel zu verbinden. Der DE-PS 100 43 295 ist auch eine Klebeverbindung des mit den Kapillar-Röhrchen bestückten Blechpaneels mit einem Schaumstoffkern zu entnehmen, allerdings sind die Einzelheiten der Klebeverbindung nicht angegeben.

Eine solche Klebeverbindung stellt bei den heliothermischen Flachkollektor-Modulen ein technisches Problem dar, da die Fügeteile unterschiedliche Elastizitätsmodule aufweisen und dadurch mehrachsige Spannungzustände entstehen können. Insbesondere kann das der Sonneneinstrahlung ausgesetzte Blechpaneel stark erwärmt und deformiert werden. Infolgedessen kann die Klebeverbindung wenigstens stellenweise zerstört und der Kontakt zwischen den Kapillar-Röhrchen und dem Blechpaneel unterbrochen werden.

Aufgabe der Erfindung ist, die vorgenannten Nachteile zu vermeiden und einen selbsttragenden, heliothermischen Flachkollektor-Modul der eingangs genannten Art anzugeben, bei dem der Dämmstoffkern mit dem Blechpaneel, insbesondere aus einer Titan-Zink-Legierung, spannungsfrei über einen großen Temperaturbereich verbunden werden kann.

Diese Aufgabe ist durch einen selbsttragenden, heliothermischen Flachkollektor-Modul der eingangs genannten dadurch gelöst, dass
- die Kapillar-Röhrchen der registerartigen Anordnung kontaktierend auf eine Oberfläche des thermoisolierenden Dämmstoffkerns gelegt sind,
- und dass der thermoisolierende Dämmstoffkern über eine elastische Klebeschicht mit dem Metallblech-Paneel verbunden ist, wobei Kapillar-Röhrchen wenigstens teilweise innerhalb der Klebeschicht zwischen dem Metallblech-Paneel und dem Dämmstoffkern eingebettet sind.

Die Kapillar-Röhrchen können jeweils in eine in dem thermoisolierenden Dämmstoffkern eingearbeitete Nut platziert sein, wobei die Kapillar-Röhrchen im wesentlichen bündig mit dem Dämmstoffkern liegen oder um einen Betrag über den Dämmstoffkern hinausragen, welcher Betrag im wesentlichen einem Dickenmaß der flüssigen Klebeschicht vor dem Aushärten entspricht.

Alternativ können die Kapillar-Röhrchen der registerartigen Anordnung direkt auf eine plane Oberfläche des thermoisolierenden Dämmstoffkerns gelegt sein.

In beiden Fällen kann wenigstens der thermoisolierende Dämmstoffkern über die elastische Klebeschicht mit dem Metallblech-Paneel verbunden sein. Dies bedeutet, dass die dem Metallblech-Paneel zugewandten Scheitelbereiche der Kapillar-Röhrchen direkt mit dem Metallblech-Paneel in Kontakt stehen können, ohne dass der Klebstoff in die Scheitelbereiche gelangt. Die Kapillar-Röhrchen können auch gänzlich vom Klebstoff umgeben sein, insbesondere dann, wenn sich der Klebstoff durch wärmeleitende Eigenschaften auszeichnet. Diese Eigenschaften können dem Klebstoff beispielsweise durch Beimischung vom Metallpulver verliehen werden.

Weiterhin ist denkbar, dem Klebstoff Fasern von kurzer Stapellänge homogen beizumischen, damit sich eine erhöhte Tragfähigkeit bzw. Stabilität der Klebeschicht ergibt. Diese Faserabschnitte können beispielsweise eine Stapellänge zwischen 0,5 mm und 3 mm aufweisen. Zu diesem Zweck eignen sich vorzugsweise Glasfasern.

Die plane oder mit den Nuten versehene Oberfläche des Schaumstoffkerns kann zahlreiche Vertiefungen zur Aufnahme von noch flüssigen Klebesubstanz aufweisen, die vorzugsweise bis zur Nuttiefe reichen oder diese geringfügig überschreiten. Diese Maßnahme kann der Stabilität des Verbundes beitragen. Die Vertiefungen können beispielsweise durch Anpreßkraft einer Borstenwalze, eines gegebenenfalls erhitzten Stempels oder dgl. hergestellt werden.

Der thermoisolierende Dämmstoffkern kann aus Schaumstoff, insbesondere aus Polystyrol- oder Polyurethan-Hartschaum, oder aus faserigem Material, wie Mineralwolle, bestehen.

Dadurch, dass die klebtechnischen Eigenschaften der Kunststoffe, darin Hartschäume, gegenüber denen der Metalle wesentlich eingeschränkt sind, gelangen praktisch ausschließlich Reaktionsklebstoffe nach dem Prinzip der Adhäsionsklebung zur Anwendung. Eine Diffusionsklebung ist wegen der Undurchlässigkeit des Metallblech-Paneels nicht geeignet.

So kann die Klebeschicht beispielsweise durch einen organischen, chemisch abbindenden 1-Komponenten-Klebstoff auf Methacrylat-Basis gebildet sein. Die Klebeschicht kann auch durch andere Klebstoffe gebildet sein, die sich durch den guten Haft an Metallen und Kunststoffen auszeichnen. Hierzu können insbesondere Reaktionsklebstoffe auf Basis von Styrol-Copolymerisaten oder elastomere PUR-Harze eingesetzt werden. Wichtig ist, dass die Klebeschicht nach dem Aushärten dauerhaft elastisch bleibt und infolge der späteren Sonneneinstrahlung nicht zu fließen beginnt. Das Verformungsvermögen der entstandenen, bereits ausgehärteten Klebeschicht erlaubt es, die Spannungszustände auszugleichen.

Das Metallblech-Paneel kann einstückig mit zwei abgewinkelten, bogenförmigen Randprofilen ausgeführt sein, mit denen sich eine treppenförmige Konfiguration der Dachhaut herstellen lässt.

Das Metallblech-Paneel kann ebenso einstückig mit zwei gegenüberliegenden, winkelig abgebogenen Kanten zur Verbindung der Metallblech-Paneele miteinander in Falztechnik ausgeführt sein.

Der Flachkollektor-Modul gemäß Erfindung kann mit wenigstens einem planken- oder plattenförmigen Versteifungselement versehen sein, das an einer dem Metallblech-Paneel abgewandten Seite des Dämmstoffkerns angeordnet ist.

Bei einer weiteren Ausführungsform kann am Dämmstoffkern eine Kunststoff- oder Metallkassette aufgesetzt sein, welche zwei gegenüberliegende, nach außen abgewinkelte Ränder aufweist, mit denen sich die Kunststoff- oder Metallkassette an der Unterseite des Metallblech-Paneels abstützt. Zwischen dem Metallblech-Paneel und dem abgewinkelten Rand der Metallkassette kann ein elastischer Körper, wie Schaumstoff- oder Gummistreifen, bzw. ein elastisches Klebeband liegen. Das Material des elastischen Körpers soll jedoch älterungs- und witterungsbeständig sein.

Die Kapillar-Röhrchen bestehen aus Metall, vorzugsweise aus Kupfer oder Edelstahl. Es ist aber nicht ausgeschlossen, anstelle der metallenen peripher metallbeschichtete Kunststoff-Rohre oder unbeschichtete Kunststoff-Rohre zu verwenden.

Wird der Dämmstoffkern entsprechend stabil und die hergestellte Klebeverbindung zwischen dem Dämmstoffkern und dem Metallblech-Paneel ausreichend elastisch, so kann auf die Metallkassette bzw. auf das untere Versteifungselement verzichtet werden.

Von großem Vorteil ist, dass der Wärmekontakt zwischen dem Rohrsystem und dem Metallblech-Paneel ununterbrochen ist, da die Kapillar-Röhrchen in die Klebeschicht eingebettet und durch das Metallblech-Paneel und den Dämmstoffkern zusammengedrückt sind. Dadurch kann auch die Kondenswasserbildung und elektrochemische Korrosion vermieden werden.

Selbstverständlich können die Flachkollektor-Module zum Kühlen des jeweiligen Raums genutzt werden, da die Wärme über den Kollektor abgegeben werden kann. Außerdem besteht die Möglichkeit, die gewonnene Wärmeenergie zum Schmelzen des Schnees im Winter auszunutzen. Es kann beispielsweise eine kombinierte, automatisch gesteuerte Technik gewählt werden, bei der eine sogenannte Direktheizung durch Flachkollektor-Module unterstützt werden kann.

Es wird ausdrücklich darauf hingewiesen, dass der Flachkollektor-Modul gemäß Erfindung ein Niedrigtemperatur-Flachkollektor ist, bei dem kein "Treibhauseffekt" auftritt, d.h. auf der zu bestrahlenden Seite des Metallblech-Paneels keine zusätzliche transparente Abdeckungen vorhanden sind, die normalerweise einen abgedichteten, aufzuheizenden Raum bilden. Das Metallblech-Paneel ist also direkt den Sonnenstrahlen ausgesetzt.

Ausführungsbeispiele der Erfindung sind anhand der Zeichnung näher dargestellt. Die Figuren zeigen:
- Figuren 1 und 2: einen Abschnitt eines Flachkollektor-Moduls in zwei Ausführungsformen, in einem schematischen Schnitt;
- Fig. 3: ein vergrößertes Detail des Schnitts gemäß der Fig. 2;
- Fig. 4: Anordnung eines elastischen Körpers zwischen dem Metallblechpaneel und einer Metallkassette;
- Fig. 5: einen zur Verbindung in Falztechnik geeigneten Flachkollektor-Modul, in einem schematischen Schnitt;
- Fig. 6: schematisch einen Abschnitt eines Treppendaches mit eingebauten Flachkollektor-Modulen, im Schnitt; und
- Fig. 7: den Flachkollektor-Modul gemäß Fig. 1 in einer perspektivischen, schematischen Ansicht.

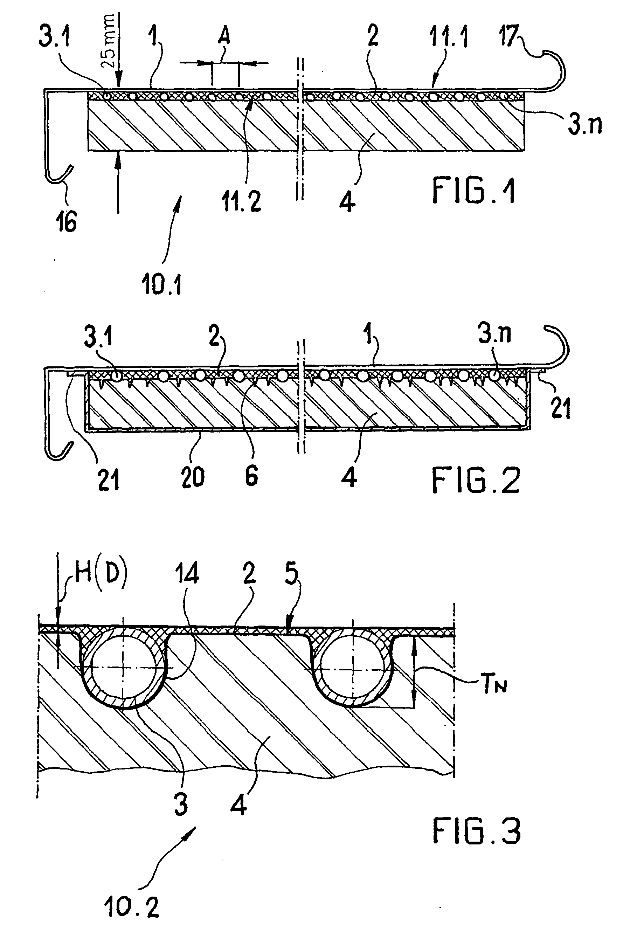

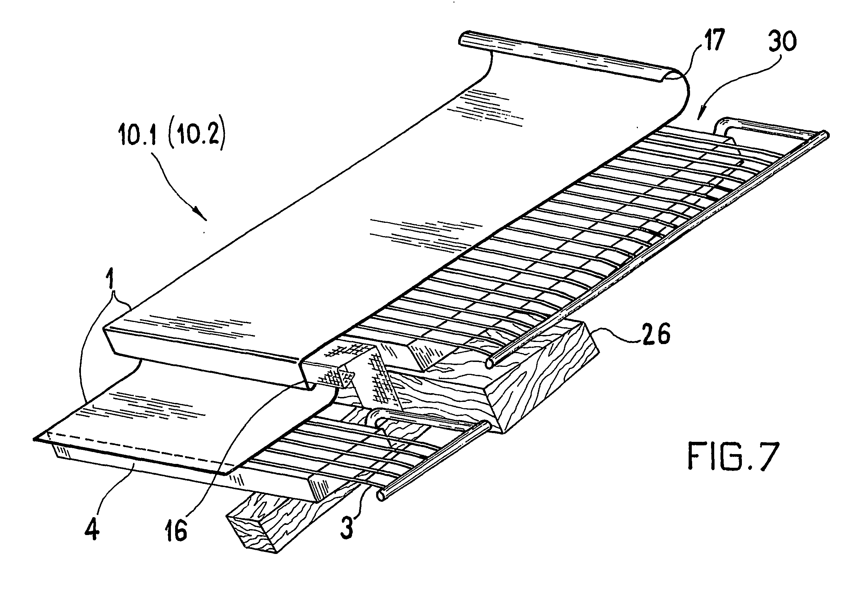

In den Figuren 1 und 7 ist ein Flachkollektor-Modul 10.1 dargestellt, der aus einem flachen, rechteckigen Metallblech-Paneel 1, einer registerartigen Anordnung 30 von zueinander parallel verlaufenden Kapillar-Röhrchen 3.1....3.n und einem thermoisolierenden Dämmstoffkern 4 aus Polyurethan-Hartschaum besteht. Der Dämmstoffkern 4 hat eine Dicke 25 mm. Das Material des vorbewitterten und dadurch dunkleren Metallblech-Paneels 1 ist eine Titan-Zink-Legierung, hier: ein Produkt der Anmelderin, RHEINZINK GmbH & Co. KG in Datteln. Durch die Oberflächenbehandlung wird ein höher Absorptionsgrad erzielt, da weniger Reflexion stattfindet.

Das Metallblech-Paneel 1 weist folgende Ausmaße auf:
- Länge 3000 mm,
- Breite 400 mm,
- Dicke 0,8 mm.

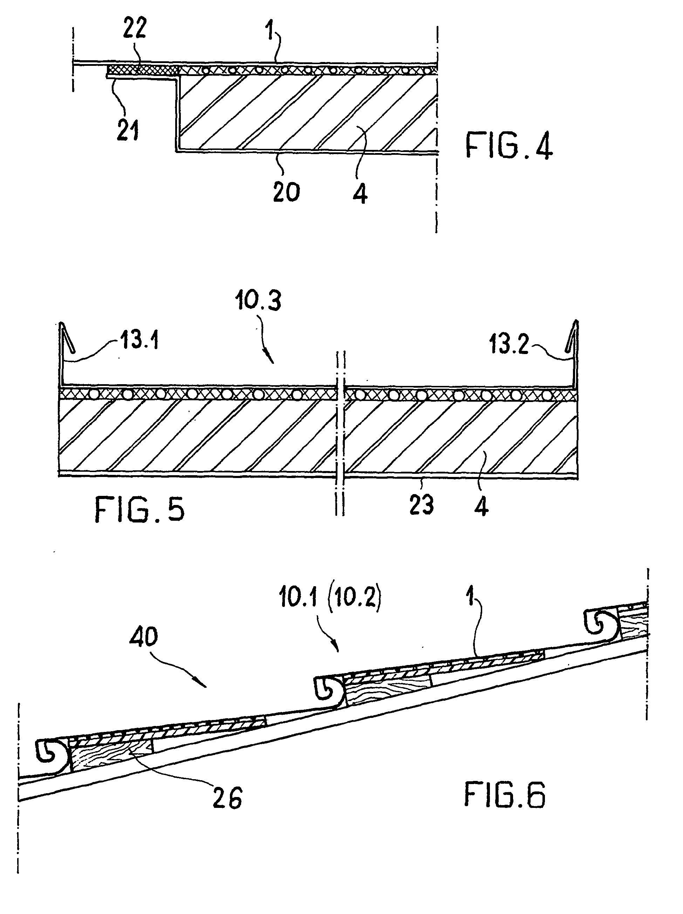

Ferner weist das Metallblech-Paneel 1 zwei abgewinkelte, bogenförmige Ränder 16, 17 auf, die zur Verbindung mit benachbarten Metallblech-Paneelen dienen, um ein Treppendach 40 gemäß der Fig. 6 herstellen zu können.

Die aus Kunststoff bestehenden Kapillar-Röhrchen 3.1....3.n weisen jeweils einen Außendurchmesser von etwa 2,5 bis 3,5 mm auf. Die Kapillar-Röhrchen 3.1....3.n verlaufen in einem einheitlichen Abstand A von etwa 8 bis 15 mm voneinander. So können im einzelnen Flachkollektor-Modul 10.1 von der Breite 400 mm etwa 30 parallel angeordnete Kapillar-Rohrabschnitte untergebracht sein.

Das Metallblech-Paneel 1 ist über eine elastische Klebeschicht 2 mit dem Dämmstoffkern 4 verbunden, welche eine Dicke aufweist, die den Außendurchmesser des Kapillar-Röhrchens nicht überschreitet. Ein flüssiger Klebstoff wird auf eine waagerecht liegende Oberfläche 5 des Dämmstoffkerns 4 aufgesprüht und kurz danach die gesamte Anordnung 30 der Kapillar-Röhrchen 3.1....3.n mit dem Metallblech-Paneel 1 gelegt und gedrückt, bis die Kapillar-Röhrchen eingebettet sind.

Als Klebstoff wird im vorliegenden Fall ein kalthärtender Ein-Komponenten-Klebstoff auf Polyurethan-Basis, ein Produkt der Firma Sika GmbH, Stuttgart, verwendet. Nach dem Aushärten verbleibt die Klebeschicht 2 dauerhaft elastisch.

Insgesamt ist ein neuartiger Flachkollektor-Modul geschaffen, der eine formschlüssige, jedoch elastische Verbindung des Dämmstoffkerns 4 mit dem Metallblech-Paneel 1 aufweist, welche Verbindung durch die Klebeschicht 2 gebildet ist, die die in Kontakt mit dem Metallblech-Paneel stehenden Kapillar-Röhrchen umgibt. Die aus Polypropylen bestehenden Kapillar-Röhrchen 3.1....3.n sind ebenfalls elastisch und dadurch im Spannungszustand nachgeben können.

Der relativ dünne Dämmstoffkern 4 aus Polyurethan-Hartschaum verleiht dem Verbund eine ausreichende Stabilität, so dass dieser direkt auf den Dachlatten 26 des Dach-Unterbaus (vgl. Fig. 6) verlegt werden kann.

Durch die verwendete Klebeverbindung mit eingebetteten Kapillar-Röhrchen und die Auswahl von Dämmstoffen und deren Dicken ist eine vorteilhafte, niedrige Gesamtdicke des Flachkollektor-Moduls erzielt worden. Diese beträgt im vorliegenden Fall 25 mm.

Bei einer anderen, in den Figuren 2 bis 4 gezeigten Ausführungsform (Bezugszeichen 10.2) sind an der Oberfläche 5 des Dämmstoffkerns 4 Nuten 14 zur Aufnahme von Kapillar-Röhrchen 3.1.....3.n eingearbeitet. Die Kapillar-Röhrchen ragen über den Dämmstoffkern 4 um einen kleinen Betrag H = 1,5 mm hinaus, welcher Betrag einem Dickenmaß D der noch flüssigen Klebeschicht 2 vor dem Aushärten entspricht.

Weiterhin ist den Figuren 2 und 4 eine den Dämmstoffkern 4 umgebende Metallkassette 20 (hier: Aluminiumblech) zu entnehmen, die den gesamten Verbund versteift, ohne Einbuße an Elastizität der Klebeverbindung hinnehmen zu müssen. Die Metallkassette 20 weist zwei gegenüberliegende, nach außen abgewinkelte und zueinander spiegelsymmetrisch angeordnete Ränder 21 auf, die an der Unterseite 11.2 des Metallblech-Paneels aufliegen. Zwischen dem Metallblech-Paneel 1 und den abgewinkelten Rändern 21 der Metallkassette 20 sind elastische Körper 22 jeweils in Form eines weichen Schaumstoffstreifens angeordnet, der die Aufgaben hat, die Wärmeleitung zu unterbinden und die relativen Verschiebungen des Metallblech-Paneels und der Metallkassette zu ermöglichen.

Die Metallkassette 20 ist stellenweise mit dem Dämmstoffkern 4 verklebt.

Ferner sind in der Fig. 2 zahlreiche Vertiefungen 6 zu sehen, welche an der Oberfläche 5 des Dämmstoffkerns 4 durch Anpreßkraft einer nicht dargestellten, gegebenenfalls bis zur Temperatur etwa 200°C erhitzten Borstenwalze eingearbeitet sind. In die Vertiefungen 6 fließt der flüssige Klebstoff ein und erhärtet dort.

In Fig. 5 ist ein weiterer Flachkollektor-Modul (Bezugszeichen 10.3) dargestellt, der sich von dem in der Fig. 1 gezeigten Flachkollektor-Modul dadurch unterscheidet, dass das Metallblech-Paneel anstelle der bogenförmigen Ränder zwei winkelig abgebogene Kanten 13.1, 13.2 zur Verbindung der Metallblech-Paneele miteinander in Falztechnik aufweist. Weiterhin ist Dämmstoffkern 4 an seiner dem Metallblech-Paneel 1 abgewandten Seite mit einem plattenförmigen Versteifungselement 23 unterlegt. Das Versteifungselement 23 besteht ebenfalls aus Aluminiumblech und ist mit dem Dämmstoffkern 4 verklebt.

### Bezugszeichenliste:

- 1: Metallblech-Paneel
- 2: Klebeschicht
- 3.1...3.n: Kapillar-Röhrchen
- 4: Dämmstoffkern
- 5: Oberfläche
- 6: Vertiefung

- 10.1; 10.2; 10.3: Flachkollektor-Modul
- 13.1, 13.2: Kante
- 14: Nut
- 16: Rand
- 17: Rand
- 20: Metallkassette
- 21: Rand
- 22: Körper
- 23: Versteifungselement
- 26: Dachlatte

- 30: Anordnung
- 40: Treppendach
- A: Abstand
- D: Dickenmaß
- H: Betrag
- T_{N}: Nuttiefe

## Patentansprüche

1. Selbsttragender, heliothermischer Flachkollektor-Modul (10.1; 10.3), umfassend:
- ein Metallblech-Paneel (1),
- eine registerartige Anordnung (30) von untereinander in Abstand liegenden Kapillar-Röhrchen (3.1.....3.n) für den Durchlauf eines flüssigen Mediums, die auf der der zu bestrahlenden Seite (11.1) abgewandten Rückseite (11.2) des Metallblech-Paneels (1) liegt,
- und einen thermoisolierenden Dämmstoffkern (4), der ebenfalls rückseitig angeordnet ist,
**dadurch gekennzeichnet, dass**
- die Kapillar-Röhrchen (3.1.....3.n) der registerartigen Anordnung (30) kontaktierend auf eine Oberfläche (5) des thermoisolierenden Dämmstoffkerns (4) gelegt sind,
- und dass der thermoisolierende Dämmstoffkern (4) über eine elastische Klebeschicht (2) mit dem Metallblech-Paneel (1) verbunden ist, wobei die Kapillar-Röhrchen (3.1.....3.n) wenigstens teilweise innerhalb der Klebeschicht zwischen dem Metallblech-Paneel (1) und dem Dämmstoffkern (4) eingebettet sind.

2. Flachkollektor-Modul (10.2) nach Anspruch 1, **dadurch gekennzeichnet, dass** die Kapillar-Röhrchen (3.1.....3.n) der registerartigen Anordnung (30) jeweils in eine in dem thermoisolierenden Dämmstoffkern (4) eingearbeitete Nut (14) platziert sind, wobei die Kapillar-Röhrchen (3.1.....3.n) mit dem Dämmstoffkern (4) im wesentlichen bündig liegen oder um einen Betrag (H) über den Dämmstoffkern (4) hinausragen, welcher Betrag im wesentlichen einem Dickenmaß (D) einer flüssigen Klebeschicht (2) vor dem Aushärten entspricht.

3. Flachkollektor-Modul (10.2) nach Anspruch 1, **dadurch gekennzeichnet, dass** die Oberfläche des Dämmstoffkerns plan ist und dass die Kapillar-Röhrchen (3.1.....3.n) direkt auf die plane Oberfläche gelegt sind.

4. Flachkollektor-Modul nach Anspruch 1 bis 3, **dadurch gekennzeichnet, dass** der thermoisolierende Dämmstoffkern (4) aus Schaumstoff besteht.

5. Flachkollektor-Modul nach Anspruch 4 **dadurch gekennzeichnet, dass** der Schaumstoff aus geschäumtem Polystyrol oder Polyurethan besteht.

6. Flachkollektor-Modul nach Anspruch 1 bis 3, **dadurch gekennzeichnet, dass** der thermoisolierende Dämmstoffkern (4) im wesentlichen aus Fasern besteht.

7. Flachkollektor-Modul nach einem der Ansprüche 1 bis 5, **dadurch gekennzeichnet, dass** das Material der Klebeschicht (2) relativ zum Material des Dämmstoffkerns einen höheren Wärmeleitkoeffizienten hat.

8. Flachkollektor-Modul nach einem der Ansprüche 1 bis 5, **dadurch gekennzeichnet, dass** die Klebeschicht (2) aus einem Klebstoff auf Methacrylat-Basis gebildet ist.

9. Flachkollektor-Modul nach Anspruch 2, **dadurch gekennzeichnet, dass** die Nuten (14) in ihrem Querschnitt drei- oder rechteckig, oval bzw. teilkreis- oder Ω-förmig sind.

10. Flachkollektor-Modul nach einem der vorhergehenden Ansprüche, **dadurch gekennzeichnet, dass** die KapillarRöhren (3.1.....3.n) aus Metall, aus peripher metallbeschichtetem Kunststoff oder aus unbeschichtetem Kunststoff bestehen.

11. Flachkollektor-Modul nach einem der vorhergehenden Ansprüche, **dadurch gekennzeichnet, dass** die plane oder mit den Nuten (14) versehene Oberfläche (5) des Dämmstoffkerns (4) zahlreiche Vertiefungen (6) zur Aufnahme von Klebstoff aufweist.

12. Flachkollektor-Modul nach Ansprüche 2 und 11, **dadurch gekennzeichnet, dass** die Vertiefungen (6) im wesentlichen bis zur Nuttiefe (T_{N}) reichen oder diese geringfügig überschreiten.

13. Flachkollektor-Modul nach Anspruch 11 und 12, **dadurch gekennzeichnet, dass** die Vertiefungen (6) durch Anpresskraft einer Borstenwalze oder dgl. entstanden sind.

14. Flachkollektor-Modul nach einem der vorhergehenden Ansprüche, **dadurch gekennzeichnet, dass** das Metallblech-Paneel (1) einstückig mit zwei abgewinkelten, bogenförmigen Randprofilen (16; 17) ausgeführt ist.

15. Flachkollektor-Modul nach einem der vorhergehenden Ansprüche, **dadurch gekennzeichnet, dass** das Metallblech-Paneel (1) einstückig mit zwei gegenüberliegenden, winkelig abgebogenen Kanten (13.1, 13.2) zur Verbindung der Metallblech-Paneele miteinander in Falztechnik ausgeführt ist.

16. Flachkollektor-Modul nach einem der vorhergehenden Ansprüche, **dadurch gekennzeichnet, dass** der Dämmstoffkern (4) an seiner dem Metallblech-Paneel (1) abgewandten Seite mit einem plattenförmigen Versteifungselement (23) unterlegt ist.

17. Flachkollektor-Modul nach einem der vorhergehenden Ansprüche, **dadurch gekennzeichnet, dass** der Dämmstoffkern (4) teilweise von einer Kunststoff- oder Metallkassette (20) umgeben ist.

18. Flachkollektor-Modul nach Anspruch 17, **dadurch gekennzeichnet, dass** die Metallkassette (20) zwei gegenüberliegende, nach außen abgewinkelte Ränder (21) aufweist, wobei zwischen dem Metallblech-Paneel (1) und dem abgewinkelten Rand (21) der Metallkassette (20) ein elastischer Körper (22) angeordnet ist.

19. Flachkollektor-Modul nach Anspruch 18, **dadurch gekennzeichnet, dass** der elastische Körper (22) ein Schaumstoffstreifen oder Klebeband ist.

20. Flachkollektor-Modul nach einem der vorhergehenden Ansprüche, **dadurch gekennzeichnet, dass** die Metallblech-Paneele (1) aus einer Titan-Zink-Legierung bestehen.

21. Flachkollektor-Modul nach einem der vorhergehenden Ansprüche, **dadurch gekennzeichnet, dass** dieser eine Gesamtdicke - inklusive Dämmstoffkern - zwischen 10 mm und 50 mm, vorzugsweise zwischen 25 mm und 35 mm aufweist.

22. Flachkollektor-Modul nach Anspruch 1 und nach weiteren Ansprüchen 2 bis 21, eingebaut in ein Treppendach (40), dessen Dachhaut aus miteinander verbundenen Metallblech-Paneelen (1) besteht.

## Claims

1. Self-supporting heliothermic flat plate collector (10.1; 10.3), comprising
- a sheet metal panel
- a register-like arrangement (30) of capillary tubes (3.1 ... 3.n) lying at a distance under each other for the passage of a liquid medium which lies on the rear face (11.2) of the sheet metal panel (1) facing away from the side to be exposed to radiation,
- and a thermoinsulating material core (4) which is also arranged on the rear face,
**characterised in that**
- the capillary tubes (3.1 ... 3.n) of the register-like arrangement (3) are placed in a contacting way on a surface (5) of the thermoinsulating material core (4),
- and **in that** the thermoinsulating material core (4) is connected by means of an elastic adhesive layer (2) to the sheet metal panel (1), wherein the capillary tubes (3.1 ... 3.n) are embedded at least partially within the adhesive layer between the sheet metal panel (1) and the insulating material core (4).

2. Flat plate collector (10.2) according to claim 1, **characterised in that** the capillary tubes (3.1 ... 3.n) of the register-like arrangement (30) are respectively placed in grooves (14) worked into the thermoinsulating material core (4), whereby the capillary tubes (3.1 ... 3.n) lie substantially flush with the insulating material core (4) or project by an amount (H) beyond the insulating material core (4), said amount corresponding substantially to a thickness measurement (D) of a liquid adhesive layer (2) before hardening.

3. Flat plate collector (10.2) according to claim 1, **characterised in that** the surface of the insulating material core is planar and **in that** the capillary tubes (3.1 ... 3.n) are placed directly on the planar surface.

4. Flat plate collector according to claims 1 to 3, **characterised in that** the thermoinsulating material core is made of foam (4).

5. Flat plate collector according to claim 4, **characterised in that** the foam consists of foamed polystyrol or polyurethane.

6. Flat plate collector according to claims 1 to 3, **characterised in that** the thermoinsulating material core (4) substantially consists of fibres.

7. Flat plate collector according to one of the claims 1 to 5, **characterised in that** the material of the adhesive layer (2) has a higher coefficient of thermal conductivity than the material of the insulating material core.

8. Flat plate collector according to one of the claims 1 to 5, **characterised in that** the adhesive layer (2) is formed from an adhesive based on methylacrylate.

9. Flat collector according to claim 2, **characterised in that** the cross-section of the grooves (14) is triangular, rectangular, oval, corresponding to part of a circle or Ω-shaped.

10. Flat plate collector according to one of the preceding claims, **characterised in that** the capillary tubes (3.1 ... 3.n) are made of metal, plastic with a peripheral metal coating or uncoated plastic.

11. Flat plate collector according to one of the preceding claims, **characterised in that** the surface (5) of the insulating material core (4) which is planar or provided with the grooves (14) comprises numerous depressions (6) for receiving adhesive.

12. Flat plate collector according to claims 2 and 11, **characterised in that** the depressions (6) extend essentially as far as the groove depth (T_{N}) or exceed this slightly.

13. Flat plate collector according to claim 11 and 12, **characterised in that** the depressions (6) have been formed by pressing force of a bristle drum or similar.

14. Flat plate collector according to one of the preceding claims, **characterised in that** the sheet metal panel (1) is designed integrally with two angled away arcuate edge profiles (16; 17).

15. Flat plate collector according to one of the preceding claims, **characterised in that** the sheet metal panel (1) is designed integrally with two opposite angularly bent edges (13.1, 13.2) for connecting the sheet metal panels with each other using the folding technique.

16. Flat plate collector according to one of the preceding claims, **characterised in that** the insulating material core (4) is underlaid on its side facing away from the sheet metal panel (1) with a plate-form reinforcing element (23).

17. Flat plate collector according to one of the preceding claims, **characterised in that** the insulating material core (4) is partially surrounded by a plastic or metal casing (2).

18. Flat plate collector according to claim 17, **characterised in that** the metal casing (20) comprises two opposing outwardly angled away edges (21), whereby an elastic body (22) is arranged between the sheet metal panel (1) and the angled away edge (21) of the metal casing (20).

19. Flat plate collector according to claim 18, **characterised in that** the elastic body (22) is a foam strip or adhesive band.

20. Flat plate collector according to one of the preceding claims, **characterised in that** the sheet metal panels (1) are made of a titanium-zinc alloy.

21. Flat plate collector according to one of the preceding claims, **characterised in that** it has an overall thickness - including the insulating material core - between 10 mm and 50 mm, preferably between 25 mm and 35 mm.

22. Flat plate collector according to claim 1 and according to further claims 2 to 21, incorporated into a stepped roof (4o), the roof membrane of which consists of interconnected sheet metal panels (1).

## Revendications

1. Module collecteur plat héliothermique, autoporteur (10.1; 10.3), comprenant:
- un panneau (1) de tôle métallique,
- un agencement (30) de type registre, qui est composé de petits tubes capillaires (3.1 ... 3.n) disposés à distance les uns des autres pour être parcourus par un milieu fluide, et qui repose sur le côté arrière (11.2) du panneau (1) de tôle métallique opposé au côté (11.1) à insoler,
- et un noyau thermiquement isolant (4) de matière calorifuge qui est également agencé sur le côté arrière,
**caractérisé en ce que**
- les petits tubes capillaires (3.1 ... 3.n) de l'agencement (30) de type registre sont posés, en contact, sur une surface (5) du noyau thermiquement isolant (4) de matière calorifuge, et **en ce que**
- le noyau thermiquement isolant (4) de matière calorifuge est attaché par une couche adhésive élastique (2) avec le panneau (1) de tôle métallique, d'une manière telle que les petits tubes capillaires (3.1 ... 3.n) sont incorporés au moins partiellement à l'intérieur de la couche adhésive entre le panneau de tôle métallique (1) et le noyau (4) de matière calorifuge.

2. Module collecteur plat (10.2) selon la revendication 1 , **caractérisé en ce que** les petits tubes capillaires (3.1 ... 3.n) de l'agencement (30) de type registre sont placés chacun dans une rainure (14) ménagée dans le noyau thermiquement isolant (4) de matière calorifuge, d'une manière telle que les petits tubes capillaires (3.1 ... 3.n) reposent sensiblement en affleurement avec le noyau (4) de matière calorifuge ou font saillie, au-dessus du noyau (4) de matière calorifuge, d'une hauteur (H) qui correspond sensiblement à une mesure d'épaisseur (D) d'une couche adhésive liquide (2) avant durcissement.

3. Module collecteur plat (10.2) selon la revendication 1, **caractérisé en ce que** la surface du noyau de matière calorifuge est plane, et **en ce que** les petits tubes capillaires (3.1 ... 3.n) sont posés directement sur la surface plane.

4. Module collecteur plat selon l'une quelconque des revendications 1 à 3, **caractérisé en ce que** le noyau thermiquement isolant (4) de matière calorifuge se compose de mousse.

5. Module collecteur plat selon la revendication 4, **caractérisé en ce que** la mousse se compose de polystyrène ou de polyuréthane expansé.

6. Module collecteur plat selon l'une quelconque des revendications 1 à 3; **caractérisé en ce que** le noyau thermiquement isolant (4) de matière calorifuge se compose essentiellement de fibres.

7. Module collecteur plat selon l'une quelconque des revendications 1 à 5, **caractérisé en ce que** le coefficient de conductivité thermique de la matière de la couche adhésive (2) est plus élevé que celui de la matière du noyau de matière calorifuge.

8. Module collecteur plat selon l'une quelconque des revendications 1 à 5, **caractérisé en ce que** la couche adhésive (2) consiste en une matière adhésive à base de méthacrylate.

9. Module collecteur plat selon la revendication 2, **caractérisé en ce que** la section transversale des rainures (14) est triangulaire, rectangulaire, ovale ou en forme d'arc de cercle ou d'Ω.

10. Module collecteur plat selon l'une quelconque des revendications précédentes, **caractérisé en ce que** les petits tubes capillaires (3.1 ... 3.n) sont en métal, en matière plastique revêtue de métal sur sa périphérie ou en matière plastique non revêtue.

11. Module collecteur plat selon l'une quelconque des revendications précédentes, **caractérisé en ce que** la surface (5), plane ou comportant des rainures (14), du noyau (4) de matière calorifuge comporte de nombreuses cavités (6) pour recevoir la matière adhésive.

12. Module collecteur plat selon les revendications 2 et 11, **caractérisé en ce que** la profondeur des cavités (6) ne parvient sensiblement que jusqu'à celle (T_{N}) des rainures, ou ne la dépasse que faiblement.

13. Module collecteur plat selon la revendication 11 ou 12, **caractérisé en ce que** les cavités (6) sont formées par la force de compression d'un rouleau à crins ou similaire.

14. Module collecteur plat selon l'une quelconque des revendications précédentes, **caractérisé en ce que** le panneau (1) de tôle métallique comprend, d'un seul tenant, deux profilés de bords (16; 17) incurvés en U.

15. Module collecteur plat selon l'une quelconque des revendications précédentes, **caractérisé en ce que** le panneau (1) de tôle métallique comprend, d'un seul tenant, deux arêtes opposées (13.1, 13.2) pliées en formant un angle, pour attacher les panneaux de tôles métalliques les uns avec les autres par une technique d'agrafage.

16. Module collecteur plat selon l'une quelconque des revendications précédentes, **caractérisé en ce qu'**un élément raidisseur (23) en forme de plaque est disposé au-dessous du noyau (4) de matière calorifuge, sur son côté opposé au panneau (1) de tôles métalliques.

17. Module collecteur plat selon l'une quelconque des revendications précédentes, **caractérisé en ce que** le noyau (4) de matière calorifuge est partiellement entouré par une caisson (20) de matière plastique ou de métal.

18. Module collecteur plat selon la revendication 17, **caractérisé en ce que** la caisson métallique (20) comporte deux bords opposés (21) pliés vers l'extérieur, et **en ce qu'**un corps élastique (22) est agencé entre le panneau (1) de tôle métallique et le bord plié (21) du caisson métallique (20).

19. Module collecteur plat selon la revendication 18, **caractérisé en ce que** le corps élastique (22) est une bande de mousse ou une bande adhésive.

20. Module collecteur plat selon l'une quelconque des revendications précédentes, **caractérisé en ce que** les panneaux (1) de tôle métallique se composent d'un alliage de zinc et de titane.

21. Module collecteur plat selon l'une quelconque des revendications précédentes, **caractérisé en ce que** son épaisseur globale - y compris le noyau de matière calorifuge - est comprise entre 10 et 50 mm, de préférence entre 25 et 35 mm.

22. Module collecteur plat selon l'une quelconque des revendications précédentes, incorporé dans un toit (40) en gradins dont la couverture de toit se compose de panneaux (1) de tôle métallique attachés entre eux.
